# EUROPEAN PATENT APPLICATION

(11) **EP 1 703 724 A2**
(43) Date of publication of application: **20.09.2006**
(21) Application number: 06005075.4
(22) Date of filing: 13.03.2006
(51) Int. Cl.: H04N 5/232

(54) **Autofocus system**

(30) Priority: 14.03.2005 JP 2005071313
(71) Applicant: Fujinon Corporation, Saitama-shi, Saitama (JP)
(72) Inventor: Sasaki, Tadashi, Saitama-shi Saitama (JP)
(74) Representative: Klunker . Schmitt-Nilson . Hirsch

(57) **Abstract**

An autofocus system is provided when the position of an AF area which is a target range of autofocus (AF) is changed, which can change (coarsely adjust) the position of the AF area to any one of a plurality of predetermined coarse adjustment positions using one direction indication operation device (e.g., joystick) and can perform fine-tuning and coarse adjustment using one direction indication operation device also when fine-tuning of the position of the AF area is enabled to thereby realize space-saving of the AF area operation device, improvement of operability and reduction of manufacturing cost or the like. When the magnitude of the angle of tilt of a joystick 32 is smaller than a default value, a CPU 30 of an AF area operation section 16 continuously moves the AF area in the tilting direction, carries out fine-tuning and moves, when the magnitude of the angle of tilt is equal to or greater than a default value, the AF area discretely to the nearest coarse adjustment position set in the tilting direction.

## Description

### BACKGROUND OF THE INVENTION

### Field of the Invention

The present invention relates to an autofocus system, and more particularly, to an autofocus system capable of changing the position of an autofocus (AF) area to be an AP target range within an image-pickup range of a camera.

### Description of the Related Art

In an image-pickup system such as a television camera in which an object image is converted to an electric signal (image signal) using an image-taking element (such as CCD), a contrast system is generally adopted as an autofocus (hereinafter referred to as "AF") system. The contrast system is a system designed to detect contrast of an image of an object captured by the image-pickup element from an image signal (video signal) of the image of the object and automatically find an optimal focusing state (in-focus state) by controlling the focus (focus lens) of an image-taking lens in such a way that the contrast becomes highest.

It is often the case that in the AF in the contrast system, the entire range of an image taken by the camera is not targeted for the AF, but only an object in part of the image-pickup range is targeted. For example, of the image signals of the object image taken by the image-pickup element, an image signal in a predetermined range to be the AF target is extracted and focus is controlled based on the image signal in the extracted range so that the contrast of the image becomes highest. This causes the AF target to be limited to the object in part of the range. In the present specification, the AF target range is called an "AF area" and the frame indicating the range of the AF area (contours of AF area) is called an "AF frame."

Furthermore, when a single AF area is fixed to a predetermined position on the screen in the image-pickup range, a rectangular AF area is generally set in the center of the screen, but an AF area which is made changeable to a desired position by an operator's instruction/operation is also known (e.g., see Japanese Patent Application Laid-Open No. 2003-224759). When the position of the AF area is made changeable, for example, a method whereby the direction in which the AF area is moved is indicated by operating an operation device such as joystick and the AF area is moved in that direction is used as a method of moving the AF area to a desired position.

However, points to be given priority may differ depending on a circumstance in which the AF is used, for example, when the position of an AF area should be accurately adjusted though it takes time or when the AF area should be quickly adjusted to an approximate position or the like. In order to make it possible to quickly adjust the AF area to an approximate position, it is preferable to predetermine specific positions predicted to be used, for example, center of a screen, positions symmetric with respect to the center of the screen in horizontal or vertical direction as coarse adjustment positions and allow the operator to select the position at which the AF area is actually set out of those coarse adjustment positions thorough simple operation.

When a plurality of positions are predetermined as coarse adjustment positions on the screen, as a method of selecting (specifying) therefrom a desired position at which the AF area is set, it is possible to consider, for example, a method whereby selection switches in a one-to-one correspondence with coarse adjustment positions are provided in the operation section so as to select a coarse adjustment position corresponding to a selection switch which is turned ON as the position at which the AF area is set out of those selection switches.

However, such a method requires the same number of selection switches as the number of selectable coarse adjustment positions, resulting in a problem that the arrangement space for the selection switches in the operation section increases as the number of coarse adjustment positions increases. Furthermore, when the number of selection switches increases, operability may deteriorate and manufacturing cost may also increase.

On the other hand, when the position of the AF area is made fine-tunable, it may be possible to continuously move the AF area using a direction indication operation device such as a joystick, track ball, four-direction switch, and track point that can indicate the direction in which the AF area is moved.

The ability to realize both types of adjustment; fine-tuning of the position of the AF area and coarse adjustment whereby the AF area is set at one of a plurality of coarse adjustment positions determined as described above is significant because it is thereby possible to make an appropriate adjustment depending on a situation in which the AF is used. Furthermore, even when fine-tuning should be performed, it is possible to shorten an adjustment time or adjustment burden by carrying out fine-tuning after a coarse adjustment. In such a case, providing an operation device for fine-tuning and an operation device for coarse adjustment separately results in a problem that the space in which components of those operation devices are arranged increases, deteriorating operability and increasing manufacturing cost.

The present invention has been implemented in view of the above described circumstances and it is an object of the present invention to provide an autofocus system capable of reducing the number of parts of an operation device for changing the position of an AF area by allowing the position of the AF area to be changed to a desired coarse adjustment position (coarse adjustment) using an operation device which indicates one direction regardless of the number of coarse adjustment positions, making it possible to conduct fine-tuning and coarse adjustment using the same operation device when fine-tuning of the position of the AF area is also made possible, and thereby realizing space saving of the operation device, improving operability and reducing manufacturing cost or the like.

### SUMMARY OF THE INVENTION

In order to attain the above described object, the autofocus system according to a first aspect of the present invention is an autofocus system comprising a coarse adjustment position setting device which presets a plurality of discrete coarse adjustment positions as positions at which an AF area to be an autofocus target range can be set on a screen within an image-pickup range of a camera, a direction indication operation device which performs operation of indicating a moving direction of the AF area, a detection device which detects a moving direction indicated by the operation of the direction indication operation device and an amount of operation or magnitude of the operation force of the operation whereby the moving direction is indicated, an AF area moving device which moves the AF area to a nearest coarse adjustment position set in the moving direction detected by the detection device with respect to a current position of the AF area, the coarse adjustment position being any one of coarse adjustment positions set by the coarse adjustment position setting device when the amount of operation or magnitude of the operation force detected by the detection device indicates a value equal to or greater than a default value and an autofocus device which automatically achieves focus on an object within the range of the AF area by controlling focus of an image-taking lens using the range of the AF area out of the image-pickup range of the camera as a target range of autofocus.

According to the first aspect of the present invention, it is possible to change the position of the AF area to a desired coarse adjustment position through the operation of the direction indication operation device. Therefore, the number of parts of the operation device for coarsely adjusting the position of the AF area can be reduced regardless of the number of coarse adjustment positions. Furthermore, by indicating the moving direction of the AF area through the direction indication operation device, the AF area is moved to the nearest coarse adjustment position in that direction, and therefore it is possible to move the AF area to a desired coarse adjustment position through quite normal operation.

The autofocus system according to a second aspect of the present invention is the invention according to the first aspect, wherein the AF area moving device moves the AF area only once when the amount of operation or magnitude of the operation force detected by the detection device is changed from a value smaller than the default value to a value equal to or greater than the default value. According to the second aspect of the present invention, even when the operation of the direction indication operation device is kept in a state in which the amount of operation or operation force is equal to or greater than a default value, the AF area moves to the nearest coarse adjustment position and then stops its movement at that position. To further move the AF area, the system is placed in a state in which the amount of operation or operation force of the direction indication operation device is smaller than the default value and then the system is operated so as to return to a state in which the amount of operation or operation force of the direction indication operation device is equal to or greater than the default value again. Therefore, when the AF area is moved to a desired coarse adjustment position, the AF area can be easily stopped at that position.

The autofocus system according to a third aspect of the present invention is the invention according to the first aspect, wherein the AF area moving device moves the AF area every time the amount of operation or magnitude of the operation force detected by the detection device continues to indicate a value equal to or greater than the default value for a predetermined time. According to the third aspect of the present invention, when the operation of the direction indication operation device is kept in a state in which the amount of operation or operation force is equal to or greater than a default value, the AF area moves to the nearest coarse adjustment position sequentially every time a predetermined time elapses. Therefore, when the AF area has moved to the desired coarse adjustment position, it is possible to stop the AF area at that position by, for example, stopping the operation until the predetermined time elapses, which makes it easier to set the AF area at the desired coarse adjustment position and saves time and trouble in the operation of moving the AF area to the desired coarse adjustment position.

The autofocus system according to a fourth aspect of the present invention is the invention according to the first, second or third aspect, wherein when the amount of operation or the magnitude of the operation force detected by the detection device indicates a value smaller than the default value, the AF area moving device continuously moves the AF area in the moving direction detected by the detection device with respect to the current position of the AF area. The fourth aspect of the present invention adopts a mode in which the position of the AF area can be fine-tuned and makes it possible to fine-tune the position of the AF area by using the coarse adjustment direction indication operation device also for changing the position of the AF area to a desired coarse adjustment position. That is, coarse adjustment is performed when the amount of operation or operation force of the direction indication operation device is equal to or greater than a default value and fine-tuning is performed when the amount of operation or operation force of the direction indication operation device is smaller than the default value.

The autofocus system according to a fifth aspect of the present invention is the invention according to the first, second or third aspect of the invention, wherein when the amount of operation or the magnitude of the operation force detected by the detection device indicates a value smaller than the default value, the AF area moving device continuously moves the AF area in the moving direction detected by the detection device with respect to the current position of the AF area and also moves the AF area at a speed or an amount of displacement according to the amount of operation or the magnitude of the operation force detected by the detection device.

According to the fifth aspect of the present invention, when the amount of operation or operation force of the direction indication operation member is smaller than a default value as in the case of the fourth aspect, if the position of the AF area is fine-tuned, the AF area is moved at a speed or an amount of displacement according to the amount of operation.

The autofocus system according to a sixth aspect of the present invention is the invention according to any one of the first to fifth aspects, wherein the detection device detects the moving direction indicated by the operation of the direction indication operation device in upward, downward, leftward and rightward directions separately and detects the amount of operation or the magnitude of the operation force of the operation of indicating the moving direction divided into the amount of operation or the magnitude of the operation force corresponding to the operation of indicating the upward, downward, leftward and rightward directions and the AF area moving device moves the AF area based on the amount of operation or the magnitude of the operation force corresponding to the operation of indicating each direction detected by the detection device for each direction detected by the detection device. The present invention adopts a mode in which when it is possible to indicate an intermediate direction (diagonal direction) between the upward/downward direction and leftward/rightward direction on the screen through the operation of the direction indication operation device as the moving direction of the AF area, processing is performed by dividing the diagonal direction into upward, downward, leftward and rightward direction components.

The autofocus system according to a seventh aspect of the present invention is the invention according to any one of the first to sixth aspects, wherein the direction indication operation device is a joystick, track ball or track point. The joystick, track ball or track point can indicate the moving direction of the AF area according to its operation direction and is a representative operation device that can detect the amount of operation or operation force.

The autofocus system according to an eighth aspect of the present invention is an autofocus system comprising a coarse adjustment position setting device which presets a plurality of discrete coarse adjustment positions as positions at which an AF area to be an autofocus target range can be set on a screen within an image-pickup range of a camera, a direction indication operation device which performs operation of indicating a moving direction of the AF area, a detection device which detects a moving direction indicated by the operation of the direction indication operation device and an operation duration of the operation whereby the moving direction is indicated, an AF area moving device which moves the AF area to a nearest coarse adjustment position set in the moving direction detected by the detection device with respect to a current position of the AF area, the coarse adjustment position being any one of coarse adjustment positions set by the coarse adjustment position setting device when the operation duration detected by the detection device indicates a value smaller than a default value and an autofocus device which automatically achieves focus on an object within the range of the AF area by controlling focus of an image-taking lens using the range of the AF area out of the image-pickup range of the camera as a target range of autofocus.

According to the eighth aspect of the present invention, it is possible to change the position of the AF area to a desired coarse adjustment position through the operation of the direction indication operation device. Therefore, the number of parts of the operation device for coarsely adjusting the position of the AF area can be reduced regardless of the number of coarse adjustment positions. Furthermore, by indicating the moving direction of the AF area through the direction indication operation device, the AF area is moved to the nearest coarse adjustment position in that direction, and therefore it is possible to move the AF area to a desired coarse adjustment position through quite normal operation.

The autofocus system according to a ninth aspect of the present invention is the invention according to the eighth aspect, wherein when the operation duration detected by the detection device shows a value equal to or greater than the default value, the AF area moving device continuously moves the AF area in the moving direction detected by the detection device with respect to the current position of the AF area. The present invention shows a case where the position of the AF area can be fine-tuned and allows the position of the AF area to be fine-tuned using the coarse adjustment direction indication operation device for changing the position of the AF area to a desired coarse adjustment position.

The autofocus system according to a tenth aspect of the present invention is an autofocus system comprising a coarse adjustment position setting device which presets a plurality of discrete coarse adjustment positions as positions at which an AF area to be an autofocus target range can be set on a screen within an image-pickup range of a camera, a direction indication operation device which performs operation of indicating a moving direction of the AF area, a detection device which detects a moving direction indicated by the operation of the direction indication operation device and an operation duration of the operation whereby the moving direction is indicated, an AF area moving device which moves the AF area to a nearest coarse adjustment position set in the moving direction detected by the detection device with respect to a current position of the AF area, the coarse adjustment position being any one of coarse adjustment positions set by the coarse adjustment position setting device when the operation duration detected by the detection device indicates a value equal to or greater than a default value and an autofocus device which automatically achieves focus on an object within the range of the AF area by controlling focus of an image-taking lens using the range of the AF area out of the image-pickup range of the camera as a target range of autofocus.

According to the tenth aspect of the present invention, it is possible to change the position of the AF area to a desired coarse adjustment position through the operation of the direction indication operation device. Therefore, the number of parts of the operation device for coarsely adjusting the position of the AF area can be reduced regardless of the number of coarse adjustment positions. Furthermore, by indicating the moving direction of the AF area through the direction indication operation device, the AF area is moved to the nearest coarse adjustment position in that direction, and therefore it is possible to move the AF area to a desired coarse adjustment position through quite normal operation.

The autofocus system according to an eleventh aspect of the present invention is the invention according to the tenth aspect, wherein when the operation duration detected by the detection device becomes a value equal to or greater than the default value, the AF area moving device moves the AF area only once. According to the eleventh aspect of the present invention, even when the direction indication operation device continues a predetermined operation of indicating the moving direction, the operation is stopped at that position after the AF area is moved to a nearest coarse adjustment position. To further move the AF area, the operation of indicating the moving direction of the AF area by the direction indication operation device is stopped once and then the operation of indicating a desired moving direction is performed again. Therefore, when the AF area is moved to the desired coarse adjustment position, it is easier to stop the AF area at that position.

The autofocus system according to a twelfth aspect of the present invention is the invention according to the tenth aspect, wherein the AF area moving device moves the AF area every time the value corresponding to a predetermined time increases after the operation duration detected by the detection device becomes a value equal to or greater than the default value. According to the twelfth aspect of the present invention, when the direction indication operation device continues a predetermined operation of indicating the moving direction, the AF area moves to a nearest coarse adjustment position sequentially every time a predetermined time elapses after the operation duration exceeds a default value. Therefore, when the AF area has moved to the desired coarse adjustment position, it is possible to stop the AF at that position by stopping the operation until the predetermined time elapses, which makes it easier to set the AF area at a desired coarse adjustment position and saves time and trouble in the operation of moving the AF area to the desired coarse adjustment position.

The autofocus system according to a thirteenth aspect of the present invention is the invention according to the tenth, eleventh or twelfth aspect, wherein when the operation duration detected by the detection device shows a value smaller than the default value, the AF area moving device continuously moves the AF area in the moving direction detected by the detection device with respect to the current position of the AF area. The thirteenth aspect of the present invention shows a case where the position of the AF area can be fine-tuned and makes it possible to fine-tune the position of the AF area using the coarse adjustment direction indication operation device for changing the position of the AF area to a desired coarse adjustment position.

The autofocus system according to a fourteenth aspect of the present invention is the invention according to any one of the eighth to thirteenth aspects, wherein the detection device detects the moving direction indicated by the operation of the direction indication operation device in upward, downward, leftward and rightward directions separately and also detects the operation duration corresponding to the operation of indicating the moving direction divided into operation durations corresponding to the operations of indicating the upward, downward, leftward and rightward directions and the AF area moving device moves the AF area based on the operation duration corresponding to the operation of indicating each direction detected by the detection device for each direction detected by the detection device. The fourteenth aspect of the present invention adopts a mode in which when it is possible to indicate an intermediate direction (diagonal direction) between the upward/downward direction and leftward/rightward direction on the screen through the operation of the direction indication operation device as the moving direction of the AF area, processing is performed by dividing the diagonal direction into upward, downward, leftward and rightward direction components.

The autofocus system according to a fifteenth aspect of the present invention is the invention according to any one of the eighth to fourteenth aspects, wherein the direction indication operation device is a four-direction switch. The invention according to the eighth to fourteenth aspects is applied to a case where an operation device which performs only ON/OFF operation such as a four-direction switch is used.

The autofocus system according to a sixteenth aspect of the present invention is the invention according to any one of the first to fifteenth aspects, further comprising a switch which moves the AF area to a center of the screen, wherein when the switch is turned ON, the AF area moving device moves the AF area to the center of the screen. As in the case of the sixteenth aspect of the present invention, provision of a switch which moves the AF area to the center of the screen is preferable because it is thereby possible to restore the AF area to a standard position instantaneously.

The autofocus system according to the present invention uses one direction indication operation device so as to change (coarsely adjust) the position of the AF area to a desired coarse adjustment position, and can thereby reduce the number of parts of the operation device for changing the position of the AF area regardless of the number of coarse adjustment positions, and also uses one direction indication operation device to perform fine-tuning and coarse adjustment when fine-tuning of the position of the AF area is also enabled and can thereby save space of the operation device, improve operability and reduce manufacturing cost or the like.

### BRIEF DESCRIPTION OF THE DRAWINGS

Fig. 1 is a block diagram showing the construction of an autofocus system used for a television broadcasting television camera system or the like;
Fig. 2 illustrates a range of an AF area in an image-pickup range;
Fig. 3 is a plan view showing the appearance of an AF area operation section;
Fig. 4 illustrates how the AF area is moved in a fine-tuning process;
Fig. 5 illustrates how the AF area is moved in a coarse adjustment process;
Fig. 6 illustrates how the AF area is moved in a coarse adjustment process;
Fig. 7 is a flow chart showing specific processing steps related to a change of the position of the AF area executed by a CPU of the AF area operation section;
Fig. 8 is a flow chart showing specific processing steps related to a change of the position of the AF area executed by the CPU of the AF area operation section when a track ball is used as the direction indication operation device for indicating the direction in which the AF area is moved;
Fig. 9 illustrates the construction of the AF area operation switch using a four-direction switch;
Fig. 10 is a flow chart showing a first mode of processing related to a change of the position of the AF area executed by the CPU of the AF area operation section when a four-direction switch and center switch are used as the direction indication operation device for indicating the direction in which the AF area is moved; and
Fig. 11 is a flow chart showing a second mode of processing related to a change of the position of the AF area executed by the CPU of the AF area operation section when a four-direction switch and center switch are used as the direction indication operation device for indicating the direction in which the AF area is moved.

### DETAILED DESCRIPTION OF THE PREFERRED EMBODIMENTS

With reference now to the attached drawings, preferred embodiments of an autofocus system according to the present invention will be explained in detail below.

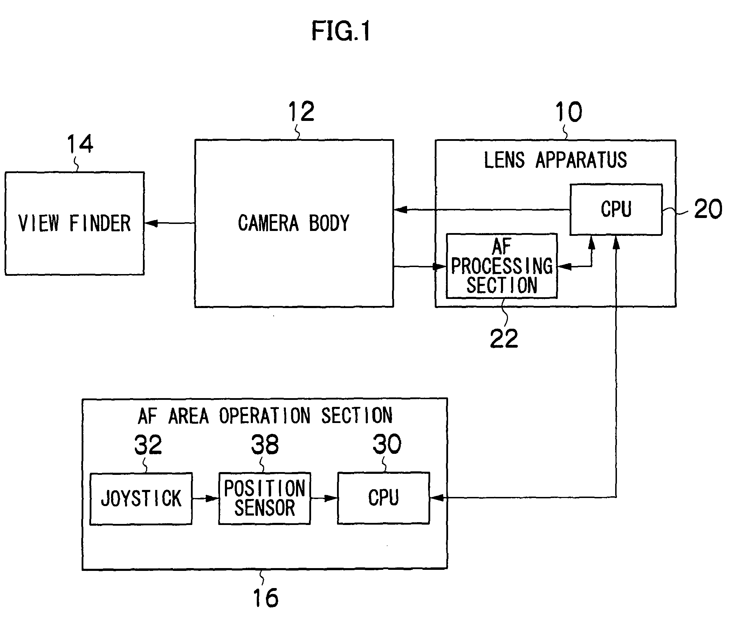

Fig. 1 is a block diagram showing the construction of an autofocus system used for a television broadcasting television camera system or the like. The autofocus system shown in the same figure is constructed of a lens apparatus 10, a camera body (camera head) 12, a view finder 14, an AF area operation section 16 or the like.

A CPU 20 and AF processing section 22 are incorporated in the lens apparatus 10. Furthermore, the lens apparatus 10 is provided with an optical system (image-taking lens) (not shown) that forms an image of object light on an the image-pickup plane of the image-pickup element of the camera body 12 and the optical system is furnished with a movable lens group such as a focus lens for focusing and a zoom lens for zooming, held inside a lens barrel in a manner movable back and forth in the optical axis direction, and a lens group fixed inside the lens barrel. Each movable lens group is driven by a motor (not shown) according to a control signal from the CPU 20 and the CPU 20 controls the positions and speeds of the focus lens and zoom lens or the like.

There are two types of control of the focus lens (focus control); manual focus (MF) and autofocus (AF), and a focus demand (controller) (not shown) connected to the lens apparatus 10 via a cable or the like is used during MF. The focus demand is provided with a manual operation member (focus knob) for a camera man to perform focus operation and a focus control signal output from the focus demand is given to the CPU 20 of the lens apparatus 10 according to the operation. The focus lens is then controlled so as to be located at a target position instructed by the focus control signal.

On the other hand, during AF, focus information (focus evaluation value) detected by the AF processing section 22 is given to the CPU 20 and the focus lens is controlled based on the focus information. The camera body 12 generates a video signal of a video image captured by the image-pickup element and the video signal (brightness signal) is given from the camera body 12 to the AF processing section 22. The AF processing section 22 carries out processing of detecting contrast of the object image based on the video signal.

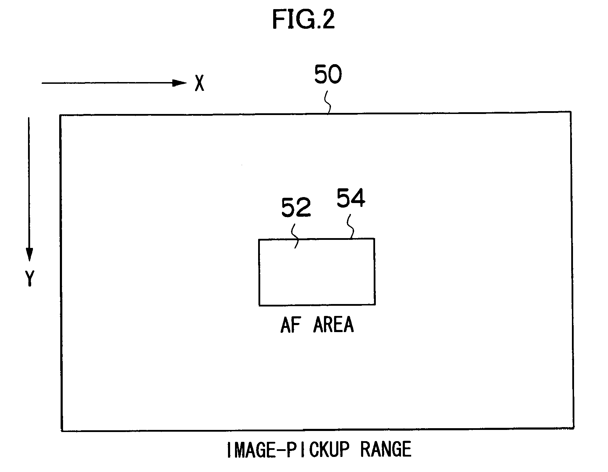

Here, assuming that the range of an object whose image is effectively captured by the image-pickup element of the camera body 12 or object image is called an "image-pickup range", as shown in Fig. 2, an AF area 52 which is the target range of AF on the screen of the image-pickup range 50 is set to be within the range of, for example, a rectangular AF frame 54. Note that the position, size (area) and shape (aspect ratio) of the AF area 52 (AF frame 54) within the image-pickup range 50 is changed according to AF area information given from the AF area operation section 16 as will be described later. Furthermore, the image-pickup range 50 in Fig. 2 corresponds to the image-taking range of the television camera and corresponds to a screen range of a video image of an object captured by the image-pickup element of the camera body 12 reproduced/displayed on the screen of the view finder 14 or the like.

In Fig. 1, the video signal given from the camera body 12 to the AF processing section 22 includes video information on the entire image-pickup range, the AF processing section 22 extracts only the video signal within the range of the AF area from the video signal and integrates a high-frequency component of the video signal by an amount corresponding to 1 field (1 screen) at a time. In this way, values indicating high/low levels of contrast of the object image within the AF area are obtained successively. The value (integrated value) is called a "focus evaluation value" in this specification.

The CPU 20 acquires focus evaluation values from the AF processing section 22 as focus information successively and moves the focus lens to a position at which the focus evaluation value becomes a maximum (local maximum value). This allows focusing of an object inside the AF area to be achieved automatically.

The video signal obtained by the image-pickup element of the camera body 12 is given from the camera body 12 to the view finder 14 and a video image currently being taken is displayed on the screen of the view finder 14. Furthermore, AF area information (information on the position, size, shape of the AF area) indicating the range of the above described AF area currently set as the target range of AF is given from the CPU 20 of the lens apparatus 10 to the camera body 12. In the camera body 12, an AF frame (contours of AF area) signal indicating the range of the current AF area is combined with the above described video signal output to the view finder 14 based on the AF area information, and as shown in Fig. 2, the image of the AF frame 54 showing the range of the current AF area 52 together-with the video image of the entire image-pickup range 50 is displayed on the screen of the view finder 14. This allows the camera man to recognize the range of the current AF area.

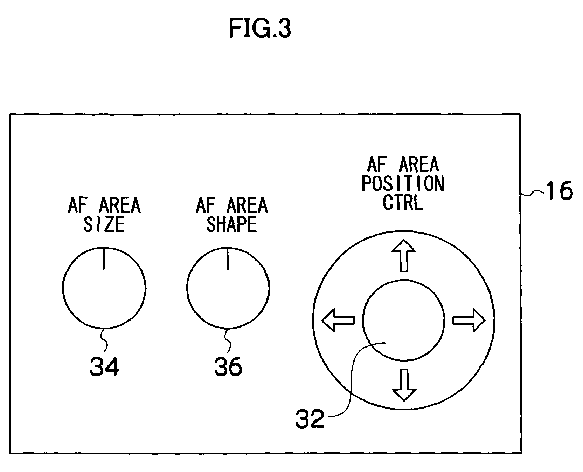

The AF area operation section 16 is an operation section to set/change the position, size or shape of the AF area and is connected to the lens apparatus 10 via a cable or the like. The AF area operation section 16 may also be constructed integral with an apparatus for other applications such as focus demand. Fig. 3 is a plan view showing the appearance of the AF area operation section 16. As shown in the same figure, the AF area operation section 16 includes a joystick 32, an AF frame size adjustment knob 34 and an AF frame shape adjustment knob 36.

The joystick 32 is a direction indication operation device to change the position of the AF area (AF frame) and when operated tilted up, down, left and right, the position (center position) of the AF area moves up, down, left and right on the screen of the image-pickup range with the size and shape of the AF area remaining unchanged (kept constant) as will be described later.

The AF frame size adjustment knob 34 is an operation device to adjust the size or the area of the AF area (AF frame) and when the AF frame size adjustment knob is rotated, the size (area) of the AF area is changed while the center position and shape of the AF area remaining unchanged.

The AF frame shape adjustment knob 36 is an operation device to adjust the shape of the AF area (AF frame), that is, the ratio of the length (vertical width) of the rectangular AF area in the vertical direction to the length (horizontal width) in the horizontal direction (aspect ratio) and when the AF frame shape adjustment knob 36 is rotated, the aspect ratio of the AF area is changed while the center position and area of the AF area remain unchanged.

As shown in Fig. 1, the AF area operation section 16 is provided with a CPU 30. The CPU 30 transmits AF area information instructing the CPU 20 of the lens apparatus 10 on the position, size (area) and shape (aspect ratio) of the AF area and the position, size and shape of the AF area in the AF processing section 22 of the lens apparatus 10 and view finder 14 are set according to the AF area information.

The CPU 30 changes the position, size and shape of the AF area instructed by the AF area-information based on the operations of the above described joystick 32, AF frame size adjustment knob 34 and AF frame shape adjustment knob 36 to thereby change the position, size and shape of the AF area in the AF processing section 22 and view finder 14.

Hereinafter, the change of the position of the AF area will be explained in detail. As shown in Fig. 1, the above described joystick 32 is provided with a position sensor 38. The joystick 32 is of a center-restoring type and signals (voltage values) indicating the angle (angle of tilt in horizontal direction) by which the joystick 32 is tilted in the leftward/rightward (horizontal) direction and the angle (angle of tilt in vertical direction) by which the joystick 32 is tilted in the upward/downward (vertical) direction by the up/down/left/rightward tilting operation relative to a neutral position to which the joystick is restored in a non-operation state are output from the position sensor 38 and the signals are given to the CPU 30.

The CPU 30 reads the angle of tilt in the horizontal direction and the angle of tilt in the vertical direction of the joystick 32 based on the signals from the position sensor 38. The CPU 30 decides whether the angle of tilt in the horizontal direction or the angle of tilt in the vertical direction is smaller than or equal to or greater than a default value or not respectively, and carries out processing (fine-tuning processing) of fine-tuning the position of the AF area when the angle of tilt is smaller than the default value and carries out processing (coarse adjustment processing) of coarsely adjusting the position of the AF area when it is equal to or greater than the default value.

In the fine-tuning processing, the position of the AF area is changed so that the AF area is continuously moved on the screen of the image-pickup range in the direction corresponding to the tilting direction of the joystick 32 at a speed according to the magnitude of the angle of tilt of the joystick 32. Suppose the tilting direction of the joystick 32 matches its corresponding direction on the screen and if, for example, the tilting direction of the joystick 32 is the horizontal direction, its corresponding direction on the screen is also assumed to be the horizontal direction. Furthermore, with regard to the respective tilting directions of the joystick 32, suppose that the orientation of tilting also matches its corresponding orientation on the screen and if, for example, the orientation of tilting of the joystick 32 in the horizontal direction is rightward, its corresponding orientation on the screen is also rightward.

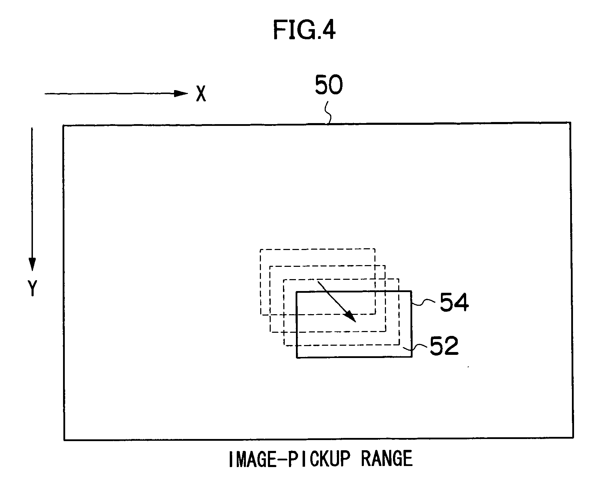

Fig. 4 shows how the AF area is moved in a case where the tilting direction.of the joystick 32 has components in both the horizontal direction and vertical direction (when tilted in a diagonal direction) and the magnitudes of angle of tilt in the respective directions (angle of tilt in the horizontal direction and angle of tilt in the vertical direction) are smaller than their respective default values. When the magnitudes of the angle of tilt in the horizontal direction and the angle of tilt in the vertical direction of the joystick 32 are smaller than the default values, as shown in the same figure, the position of the AF area 52 on the screen with respect to its horizontal direction is continuously changed in the tilting orientation in the horizontal direction (rightward in this example) of the joystick 32, and with respect to its vertical direction, continuously changed in the tilting orientation in the vertical direction (downward in this example) of the joystick 32. As a result, as shown in this example, when the joystick 32 is tilted toward the diagonally downward right, the corresponding AF area 52 (AF frame 54) is moved toward the diagonally downward right. Furthermore, at that moment with respect to the horizontal direction, the AF area 52 is moved at a speed corresponding to the magnitude of the angle of tilt in the horizontal direction of the joystick 32 (e.g., speed proportional to the magnitude of the angle of tilt in the horizontal direction), and with respect to the vertical direction, at a speed corresponding to the magnitude of the angle of tilt in the vertical direction of the joystick 32 (e.g., speed proportional to the magnitude of the angle of tilt in the vertical direction).

Thus, by operating the joystick 32 at angles of tilt smaller than default values in the horizontal direction and vertical direction respectively, it is possible to fine-tune the position of the AF area.

In coarse adjustment processing, a plurality of specific discrete positions preset on the screen of the image-pickup range are assumed to be coarse adjustment positions at which the AF area can be set and the position of the AF area is changed such that the AF area is discretely moved to coarse adjustment positions according to the tilting direction of the joystick 32.

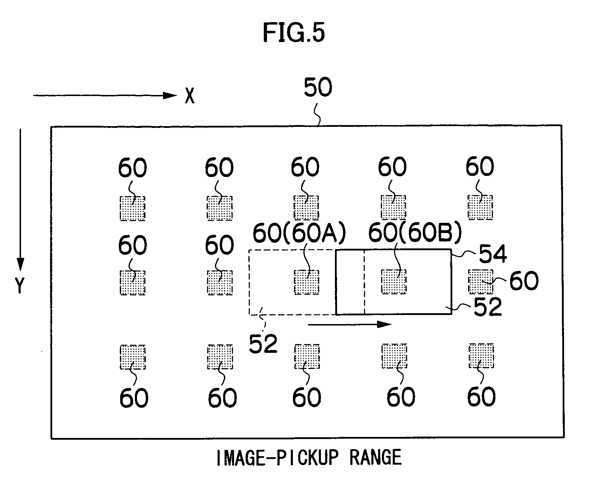

Fig. 5 illustrates how the AF area is moved when the tilting direction of the joystick 32 is only the horizontal direction and the magnitude of the angle of tilt in the horizontal direction is equal to or greater than the default value. As shown in the same figure, coarse adjustment positions 60, 60, 60, ... are set at 3 locations in the vertical direction, 5 locations in the horizontal direction, a total of 15 locations on the screen of the image-pickup range 50 including 1 location in the center of the screen. The coarse adjustment positions 60 are expressed by rectangular ranges in the figure, but they are actually set as coordinate points on the X-axis and Y-axis.

When the magnitude of the angle of tilt in the horizontal direction of the joystick 32 is equal to or greater than the default value, as shown in the same figure, the position of the AF area 52 (AF frame 54) is changed from the current position (coarse adjustment position 60A in the center of the screen in this example) to a nearest coarse adjustment position 60B set in the tilting orientation in the horizontal direction of the joystick 32 (rightward in this example). Likewise, when the magnitude of the angle of tilt in the vertical direction of the joystick 32 is equal to or greater than the default value, the position of the AF area 52 is changed from the current position to a nearest coarse adjustment position set in the tilting orientation in the vertical direction of the joystick 32.

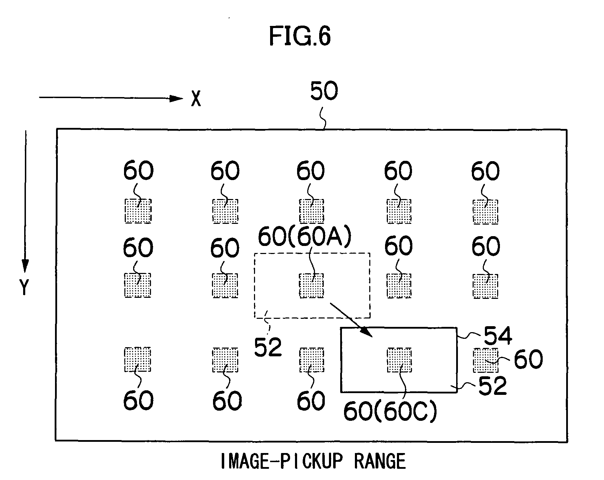

When the tilting direction of the joystick 32 is a diagonal direction having both horizontal direction and vertical direction components, if the magnitudes of the angles of tilt in both directions (angle of tilt in the horizontal direction and angle of tilt in the vertical direction) become equal to or greater than the default values, the position of the AF area is changed to nearest coarse adjustment positions in both the horizontal direction and vertical direction respectively one by one. For example, when the AF area 52 (AF frame 54) is set at a coarse adjustment position 60A in the center of the screen as shown in Fig. 6, if the joystick 32 is tilted toward the diagonally downward right and the magnitude of the angle of tilt in the horizontal direction and the magnitude of the angle of tilt in the vertical direction become equal to or greater than their respective default values, the AF area 52 is moved to a coarse adjustment position 60C set at the diagonally downward right with respect to the coarse adjustment position 60A in the center of the screen.

Note that in this embodiment, when the magnitude of the angle of tilt in the horizontal direction or angle of tilt in the vertical direction of the joystick 32 becomes equal to or greater than the default value once, the position of the AF area is changed to the nearest coarse adjustment position and if the angle of tilt of the joystick 32 is kept to a value equal to or greater than the default value thereafter, the position of the AF area will not be changed. Therefore, when the position of the AF area is changed to a further neighboring coarse adjustment position, it is necessary to return the angle of tilt of the joystick 32 to a value smaller than the default value once and then return the angle of tilt of the joystick 32 to a value equal to or greater than the default value.

Furthermore, when the AF area is not set at any coarse adjustment position, no coarse adjustment position may exist on any line in the direction (horizontal direction or vertical direction) in which the magnitude of the angle of tilt (angle of tilt in the horizontal direction or angle of tilt in the vertical direction) of the joystick 32 is equal to or greater than the default value, that is, on the line in the horizontal direction or vertical direction that passes the current position of the AF area. Thus, in the definition of the nearest coarse adjustment position with respect to the current position of the AF area, as for the horizontal direction, the screen is divided into the right and left areas bordering on the current position (X coordinate value) of the AF area, the coarse adjustment position nearest to the current position of the AF area (except the coarse adjustment position set as the current position) out of the coarse adjustment positions set in the right area of the screen is designated as the rightward nearest coarse adjustment position and the coarse adjustment position nearest to the current position of the AF area out of the coarse adjustment positions set in the left area of the screen is designated as the leftward nearest coarse adjustment position. The same applies to the nearest coarse adjustment positions with regard to the vertical direction, too.

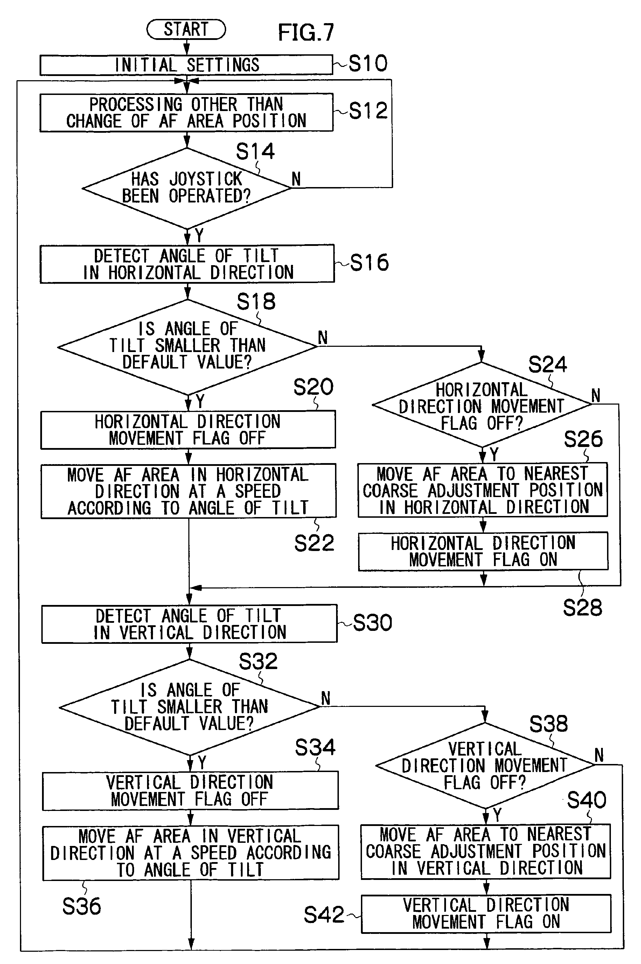

Next, specific steps of processing related to a change of the position of the AF area executed by the CPU 30 of the AF area operation section 16 will be explained using the flow chart in Fig. 7. When the CPU 30 starts processing, it makes required initial settings first (step S 10) and executes processing other than the change of the position of the AF area (step S 12).

Next, the CPU 30 decides whether the joystick 32 has been operated or not (step S14). When the decision result is NO, the CPU 30 returns to the processing in step S12. When the decision result is YES, the CPU 30 detects the angle of tilt in the horizontal direction of the joystick 32 based on the signal obtained from the position sensor 38 of the joystick 32 (step S16). The CPU 30 then decides whether the magnitude of the angle of tilt in the horizontal direction is smaller than a default value or not (step S 18).

When the result of the decision processing in step S18 is YES, the CPU 30 executes the above described fine-tuning processing. First, the horizontal direction movement flag is set to OFF (step S20). The fact that the horizontal direction movement flag is OFF means that an operation has been performed such that the angle of tilt in the horizontal direction of the joystick 32 is a value smaller than the default value. In the initial settings in step S10, the horizontal direction movement flag is set to OFF.

Next, the CPU 30 continuously moves the AF area in the horizontal direction (tilting orientation of joystick 32) at a speed according to the angle of tilt in the horizontal direction (step S22). Fine-tuning processing in the horizontal direction is performed in this way.

On the other hand, when the result of the decision processing in step S 18 is NO, the CPU 30 executes the above described coarse adjustment processing. The CPU 30 decides whether the horizontal direction movement flag is OFF or not first (step S24). When the result of the decision processing in step S 18 is NO for the first time after the magnitude of the angle of tilt in the horizontal direction of the joystick 32 is changed from a value smaller than the default value to a value equal to or greater than the default value, the horizontal direction movement flag is OFF and in that case, the result of the decision processing in step S24 is YES.

When the result of the decision processing in step S24 is YES, the CPU 30 moves the AF area to the nearest (the shortest possible distance) coarse adjustment position set in the horizontal direction (tilting orientation of the joystick 32) with respect to the current position of the AF area (step S26). The coarse adjustment processing in the horizontal direction regarding the position of the AF area is performed in this way. Next, the CPU 30 sets the horizontal direction movement flag to ON (step S28).

When the result of the decision processing in step S24 is NO, that is, when the processing in step S26 is executed once after the magnitude of the angle of tilt in the horizontal direction of the joystick 32 is changed from a value smaller than the default value to a value equal to or greater than the default value and then the magnitude of the angle of tilt in the horizontal direction remains equal to or greater than the default value thereafter, the processes in step S26 and step S28 will not be executed.

When the processing to make a change of the position of the AF area regarding the horizontal direction is executed, the CPU 30 then executes processing for changing the position of the AF area regarding the vertical direction as in the case of the horizontal direction. The CPU 30 detects the angle of tilt in the vertical direction of-the joystick 32 based on the signal obtained from the position sensor 38 of the joystick 32 (step S30). The CPU 30 then decides whether the magnitude of the angle of tilt in the vertical direction is smaller than the default value or not (step S32).

When the result of the decision processing in step S32 is YES, the CPU 30 executes the above described fine-tuning processing. First, the vertical direction movement flag is set to OFF (step S34). The fact that the vertical direction movement flag is OFF means that the angle of tilt in the vertical direction of the joystick 32 is smaller than the default value. In the initial settings in step S10, the vertical direction movement flag is set to OFF.

Next, the CPU 30 continuously moves the AF area in the vertical direction (tilting orientation of joystick 32) at a speed according to the angle of tilt in the vertical direction (step S36). The fine-tuning processing in the vertical direction regarding the position of the AF area is performed in this way. The CPU 30 then returns to the processing in step S12.

On the other hand, when the result of the decision processing in step S32 is NO, the CPU 30 executes the above described coarse adjustment processing. The CPU 30 decides whether the vertical direction movement flag is OFF or not first (step S38). When the result of the decision processing in step S32 is NO for the first time after the magnitude of the angle of tilt in the horizontal direction of the joystick 32 is changed from a value smaller than the default value to a value equal to or greater than the default value, the vertical direction movement flag is OFF and in that case, the result of the decision processing in step S38 is YES.

When the result of the decision processing in step S38 is YES, the CPU 30 moves the AF area to the nearest (the shortest possible distance) coarse adjustment position set in the vertical direction (tilting orientation of the joystick 32) with respect to the current position of the AF area (step S40). The coarse adjustment processing in the vertical direction is performed in this way. Next, the CPU 30 sets the vertical direction movement flag to ON (step S42) and returns to the processing in step S12.

When the result of the decision processing in step S38 is NO, that is, when the processing in step S40 is executed once after the magnitude of the angle of tilt in the vertical direction of the joystick 32 is changed from a value smaller than the default value to a value equal to or greater than the default value and the magnitude of the angle of tilt in the vertical direction remains equal to or greater than the default value thereafter, the CPU 30 returns the processing in step S 12 without executing the processes in step S40 and step S42.

As a result of the above described processing, if the magnitude of the angle of tilt of the joystick 32 is smaller than the default value, fine-tuning processing is performed and if it is equal to or greater than the default value, coarse adjustment processing is performed.

In the processing in Fig. 7, if the magnitude of the angle of tilt (angle of tilt in the horizontal direction or angle of tilt in the vertical direction) of the joystick 32 remains equal to or greater than the default value, the AF area is supposed to move to the nearest coarse adjustment position only once through coarse adjustment processing, but the present invention is not limited to this and when the magnitude of the angle of tilt of the joystick 32 remains equal to or greater than the default value, it is also possible to move the AF area to the coarse adjustment position (except the coarse adjustment position set as the current position) nearest to the current position every time a predetermined time elapses.

Furthermore, when the joystick 32 is tilted in a diagonal direction, if any one of the magnitude of the angle of tilt in the horizontal direction and the magnitude of the angle of tilt in the vertical direction of the joystick 32 is smaller than the default value and the other is equal to or greater than the default value, fine-tuning processing is performed in the direction in which the magnitude of the angle of tilt is smaller than the default value in the processing in Fig. 7 and coarse adjustment processing is performed in the direction in which the magnitude of the angle of tilt is equal to or greater than the default value. In contrast to this, when the joystick 32 is tilted in the diagonal direction, it is possible to regard as invalid the operation of the joystick 32 in the direction in which the magnitude of the angle of tilt is smaller than the default value and perform no fine-tuning processing when coarse adjustment processing is performed in any one direction. Or when coarse adjustment processing is performed in any one direction, it is also possible to perform coarse adjustment processing in the other direction.

Furthermore, when the joystick 32 is tilted in a diagonal direction, the processing in Fig. 7 is carried out on the angle of tilt in the horizontal direction and the angle of tilt in the vertical direction separately so as to perform processing of changing the position of the AF area in the horizontal direction and vertical direction. But the present invention is not limited to this. For example, when the joystick 32 is tilted in a diagonal direction, it is possible to detect the magnitude of the angle of tilt in that direction (calculate the magnitude based on the angle of tilt in the horizontal direction and the angle of tilt in the vertical direction) and move the AF area to the nearest coarse adjustment position in the direction in which the joystick 32 is tilted when the magnitude of the angle of tilt is equal to or greater than the default value to thereby perform processing similar to that when the joystick 32 is tilted only in the horizontal direction or vertical direction in the processing of Fig. 7.

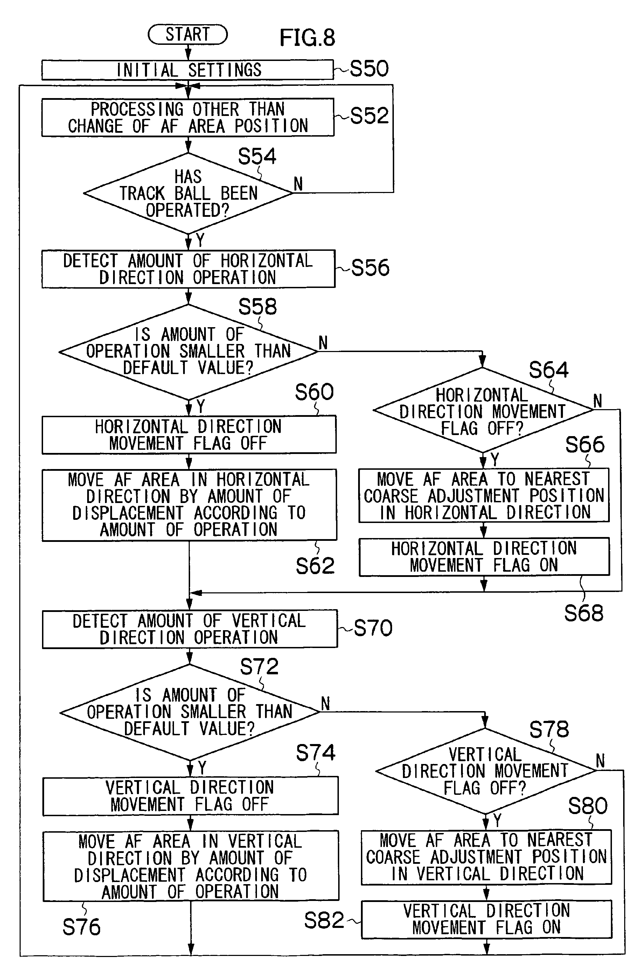

Next, a case where a track ball is placed as the direction indication operation device for indicating the moving direction of the AF area in the AF area operation section 16 instead of the joystick 32 will be explained. As publicly known, the track ball is a direction indication operation device for a user to input a desired direction and the magnitude of operation in the direction based on the rotation direction of a ball supported in a rotatable manner and the amount of rotation (amount of operation). In this case, specific processing steps related to a change of the position of the AF area executed by the CPU 30 are shown in a flow chart of Fig. 8. When the CPU 30 starts processing, it performs a required initial settings first (step S50) and performs processing other than changing the position of the AF area (step S52).

Next, the CPU 30 decides whether the track ball has been operated or not (step S54). When the decision result is NO, the CPU 30 returns to the processing in step S52. When the decision result is YES, the CPU 30 detects the amount of operation of the track ball in the horizontal direction (amount of operation in the horizontal direction) (step S56). The CPU 30 then decides whether the amount of the horizontal direction operation is smaller than a default value or not (step S58). The processing from step S52 onward in this flow chart is executed repeatedly and the processing in step S52 above is carried out for a substantially predetermined time. For this reason, the processing in each step is carried out every substantially predetermined time. Furthermore, the amount of horizontal direction operation detected by the processing in step S56 indicates the amount of rotation that the track ball has rotated in the horizontal direction from the previous processing in step S26 to the processing this time in step S26. Therefore, the amount of horizontal direction operation detected by the processing in step S56 expresses the amount of rotation per predetermined time in the horizontal direction, that is, the magnitude of the rotation speed. The same applies to the amount of vertical direction operation detected by the processing in step S70 which will be described later.

When the result of the decision processing in step S58 is YES, the CPU 30 executes fine-tuning processing. The CPU 30 sets the horizontal direction movement flag to OFF (step S60). The fact that the horizontal direction movement flag is OFF means that an operation is performed such that the amount of horizontal direction operation of the track ball is a value smaller than the default value. In the initial settings in step S50, the horizontal direction movement flag is set to OFF.

Next, the CPU 30 moves the AF area in the horizontal direction (tilting orientation of the joystick 32) by the amount of displacement according to (e.g., proportional to) the amount of horizontal direction operation (step S62). Fine-tuning processing in the horizontal direction is performed in this way.

On the other hand, when the result of decision processing in step S58 is NO, the CPU 30 executes coarse adjustment processing. The CPU 30 decides whether the horizontal direction movement flag is OFF or not (step S64). When the result of the decision processing in step S58 is NO for the first time after the amount of horizontal direction operation of the track ball is changed from a value smaller than the default value to a value equal to or greater than the default value, the horizontal direction movement flag is OFF and the result of decision processing in step S64 is YES in that case.

When the result of the decision processing in step S64 is YES, the CPU 30 moves the AF area to the nearest coarse adjustment position set in the horizontal direction (orientation of the track ball in the operation direction) with respect to the current position of the AF area (step S66). Coarse adjustment processing in the horizontal direction is performed in this way. Next, the CPU 30 sets the horizontal direction movement flag to ON (step S68).

When the result of the decision processing in step S64 is NO, that is, the processing in step S66 is executed once after the amount of horizontal direction operation of the track ball is changed from a value smaller than the default value to a value equal to or greater than the default value and when the amount of horizontal direction operation remains equal to or greater than the default value thereafter, processes in step S66 and step S68 are not executed.

When the processing of changing the position of the AF area with respect to the horizontal direction is performed as shown above, the CPU 30 then executes processing for changing the position of the AF area with respect to the vertical direction as in the case of the horizontal direction. First, the CPU 30 detects the amount of operation (the amount of vertical direction operation) in the vertical direction of the track ball first (step S70). The CPU 30 then decides whether the amount of vertical direction operation is smaller than the default value or not (step S72).

When the result of the decision processing in step S72 is YES, the CPU 30 executes fine-tuning processing. First, the CPU 30 sets the vertical direction movement flag to OFF (step S74). The fact that the vertical direction movement flag is OFF means that the amount of vertical direction operation of the track ball is smaller than the default value. In the initial settings in step S50, the vertical direction flag is set to OFF.

Next, the CPU 30 moves the AF area in the vertical direction (orientation of track ball operation) by the amount of displacement according to the amount of vertical direction operation (step S76). Fine-tuning processing in the vertical direction is performed in this way. The CPU 30 then returns to the processing in step S52.

On the other hand, when the result of the decision processing in step S72 is NO, the CPU 30 executes coarse adjustment processing. The CPU 30 decides whether the vertical direction movement flag is OFF or not first (step S78). When the result of the decision processing in step S72 is NO for the first time after the amount of vertical direction operation of the track ball is changed from a value smaller than the default value to a value equal to or greater than the default value, the vertical direction movement flag is set to OFF, and the result of the decision processing in step S78 is YES in that case.

When the result of the decision processing in step S78 is YES, the CPU 30 moves the AF area to the nearest coarse adjustment position set in the vertical direction (orientation of track ball operation) with respect to the current position of the AF area (step S80). Coarse adjustment processing in the vertical direction is performed in this way. The CPU 30 then sets the vertical direction movement flag to ON (step S82) and returns to the processing in step S52.

When the result of the decision processing in step S78 is NO, that is, the processing in step S80 is performed once after the amount of vertical direction operation of the track ball is changed from a value smaller than the default value to a value equal to or greater than the default value and the amount of vertical direction operation remains equal to or greater than the default value thereafter, the CPU 30 returns to the processing in step S52 without executing the processes in step S80 and step S82.

As a result of the above described processing, if the amount of operation of the track ball is smaller than the default value, fine-tuning processing is performed and if the amount of operation of the track ball is equal to or greater than the default value, coarse adjustment processing is performed.

When the amount of operation of the track ball (the amount of horizontal direction operation or the amount of vertical direction operation) remains equal to or greater than the default value through the processing in Fig. 8, the AF area is moved to the nearest coarse adjustment position only once through the coarse adjustment processing, but the present invention is not limited to this and when the amount of operation of the track ball remains equal to or greater than the default value, it is also possible to move the AF area to the nearest coarse adjustment position (except the coarse adjustment position set as the current position) with respect to the current position every time a predetermined time elapses.

Furthermore, when the track ball is operated in the diagonal direction and any one of the amount of horizontal direction operation of the track ball and the amount of vertical direction operation is smaller than the default value and the other is equal to or greater than the default value, fine-tuning processing is performed in the direction in which the amount of operation is smaller than the default value and coarse adjustment processing is performed in the direction in which the amount of operation is equal to or greater than the default value. However, in such a case, the operation of the track ball in the direction in which the amount of operation is smaller than the default value may be regarded as invalid and fine-tuning processing may not be performed in the case where coarse adjustment processing is performed in any one direction. Furthermore, when coarse adjustment processing is performed in any one direction, coarse adjustment processing may be performed in the other direction, too.

Furthermore, in the processing of Fig. 8, when the track ball is operated in a diagonal direction, the amount of operation is divided into the amount of horizontal direction operation and the amount of vertical direction operation and processing of changing the position of the AF area is performed in the horizontal direction and vertical direction separately, but the present invention is not limited to this. It is also possible to perform processing as in the case where the track ball is operated only in the horizontal direction or vertical direction in the above described embodiment, for example, when the track ball is operated in the diagonal direction, it is possible to detect the amount of operation in that direction (calculate the amount of operation based on the amount of horizontal direction operation and the amount of vertical direction operation) and move the AF area to the nearest coarse adjustment position in the direction in which the track ball is operated when the amount of operation is equal to or greater than the default value.

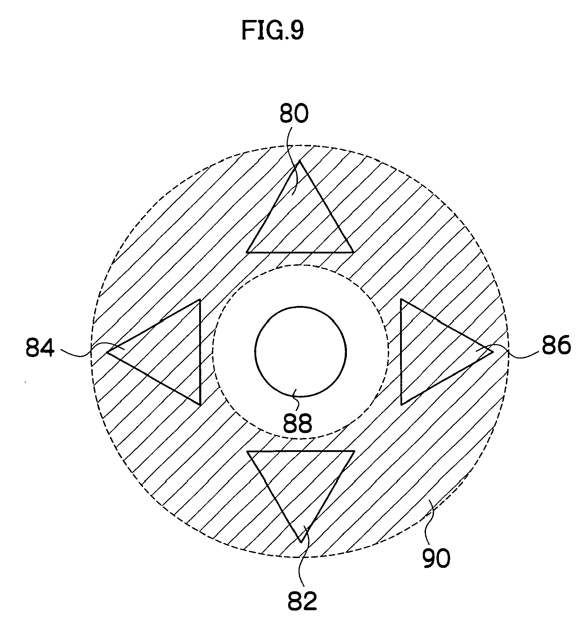

Next, a case where a four-direction switch is placed as the direction indication operation device which indicates the moving direction of the AF area in the AF area operation section 16 instead of the joystick 32 will be explained. Fig. 9 illustrates the construction of the AF area operation switch using a four-direction switch. In the AF area operation switch shown in the same figure, four direction switches 80, 82, 84, 86 which are turned ON/OFF to indicate upward, downward, leftward and rightward directions are arranged up, down, left and right. Furthermore, a center switch 88 is disposed in the center of four-direction switches 80 to 86. Instead of the four-direction switches 80 to 86 which are turned ON/OFF by an independent operation member, it is also possible to construct a single-piece operation member 90 as shown with hatching in the same figure which can swing in response to a pushing operation at a desired position so that each direction switch 80 to 86 is turned ON/OFF at the pushing position of the operation member 90. Or other construction may also be adopted.

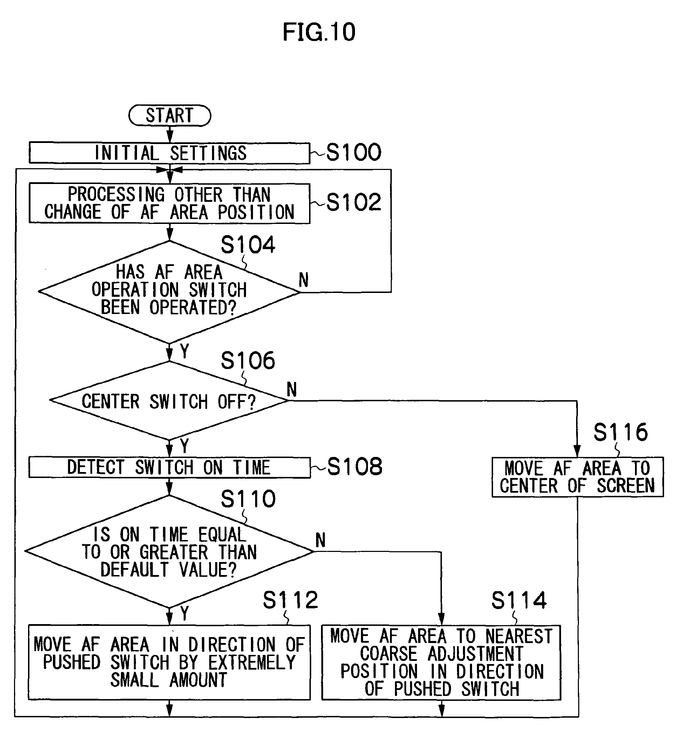

Fig. 10 is a flow chart showing a first mode of the processing of changing the position of the AF area executed by the CPU 30 of the AF area operation section 16 when the AF area operation switch in Fig. 9 is used. In the processing in the first mode, coarse adjustment processing is preformed when each direction switch 80 to 86 is turned ON for a short time and fine-tuning processing is preformed when turned ON for a long time.

When the CPU 30 starts processing, it performs required initial settings first (step S100) and performs processing other than changing the position of the AF area (step S 102).

Next, the CPU 30 decides whether the AF area operation switch has been operated or not (whether the switch is turned ON or not) (step S104). When the decision result is NO, the CPU 30 returns to the processing in step S102. When the decision result is YES, the CPU 30 decides whether the center switch 88 is OFF or not (step S106).

When the decision result in step S 106 is YES, that is, when the operation performed on the AF area operation switch is caused by turning ON of any one of the direction switches 80 to 86, the CPU 30 detects the time during which the direction switch which has been turned ON out of the direction switches 80 to 86 remains ON (ON time) (step S108). Then, the CPU 30 decides whether the detected ON-time duration is equal to or greater than a default value or not (step S 110).

When the result of the decision processing in this step S 110 is YES, the CPU 30 moves the AF area in the direction of the direction switch which has been turned ON by an extremely small amount with respect to the current position of the AF area as fine-tuning processing (step S 112).

On the other hand, when the result of the decision processing in step S110 is NO, the CPU 30 moves the AF area to the nearest coarse adjustment position set in the direction corresponding to the direction switch which has been turned ON with respect to the current position of the AF area as coarse adjustment processing (step S114).

When the processing in step S 112 or step S 114 ends, the CPU 30 returns to the processing in step S 102.

When the result of the decision processing in step S106 above is NO, that is, when the center switch 88 is turned ON, the CPU 30 moves the AF area to the center of the screen. That is, the CPU 30 moves the AF area to the coarse adjustment position set in the center of the screen (step S116). The CPU 30 then returns to the processing in step S102.

Coarse adjustment processing is performed when each direction switch 80 to 86 is turned ON for a short time through the above described processing and fine-tuning processing is performed when each direction switch is turned ON for a long time. Furthermore, the center switch 88 allows the AF area to be easily moved to the standard center position of the screen.

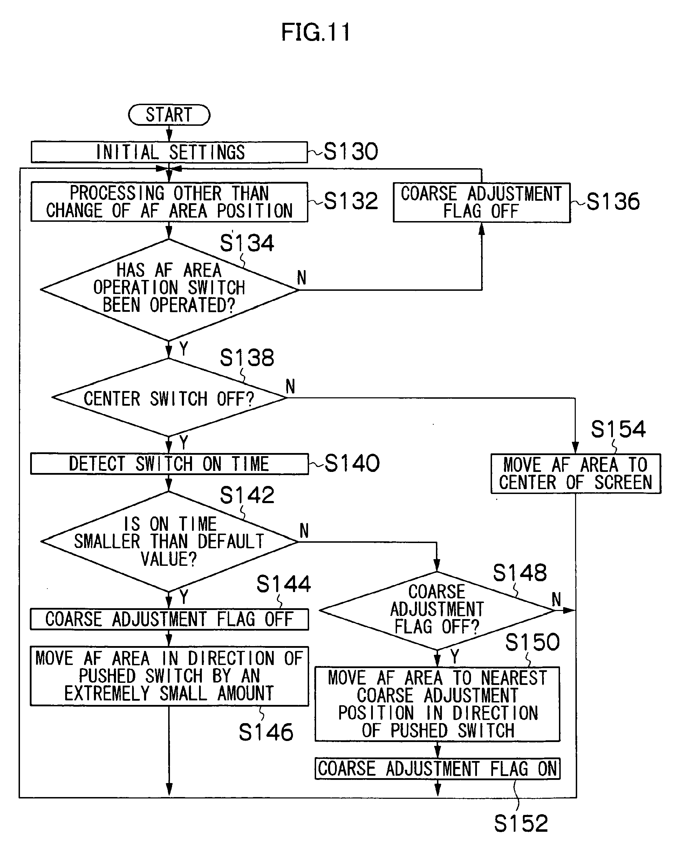

Fig. 11 is a flow chart showing a second mode of processing of changing the position of the AF area executed by the CPU 30 of the AF area operation section 16 when the AF area operation switch in Fig. 9 is used. In the processing in the second mode, fine-tuning processing is performed when each direction switch 80 to 86 is turned ON for a short time and coarse adjustment processing is performed when each direction switch is turned ON for a long time.

When the CPU 30 starts processing, it performs required initial settings (step S 130) and performs processing other than changing the position of the AF area (step S 132).

Next, the CPU 30 decides whether the AF area operation switch is operated or not (whether the switch is turned ON or not) (step S 134). When the decision result is NO, the CPU 30 sets the coarse adjustment flag to OFF (step S136) and returns to the processing in step S 132. When the decision result is YES, the CPU 30 then decides whether the center switch 88 is OFF or not (step S138).

When the result of the decision processing in step S138 is YES, that is, when the operation of the AF area operation switch is caused by turning ON of any one of the direction switches 80 to 86, the CPU 30 detects the time during which the direction switch which has been turned ON out of the direction switches 80 to 86 remains ON (ON time) (step S 140). Then, the CPU 30 decides whether the detected ON-time duration is smaller than the default value or not (step S 142).

When the result of the decision processing in this step S 142 is YES, the CPU 30 executes fine-tuning processing. First, the CPU 30 sets the coarse adjustment flag to OFF (step S 144). The CPU 30 then moves the AF area in the direction of the direction switch which has been turned ON by an extremely small amount (step S146). After carrying out processing in step S 146, the CPU 30 returns to the processing in step S 132.

On the other hand, when the result of the decision processing in step S 142 is NO, the CPU 30 executes coarse adjustment processing. First, the CPU 30 decides whether the coarse adjustment flag is OFF or not (step S148). When the decision result is YES, the CPU 30 moves the AF area to the nearest coarse adjustment position set in the direction of the direction switch which has been turned ON with respect to the current position of the AF area (step S 150). The CPU 30 then sets the coarse adjustment flag to ON (step S 152) and returns to the processing in step S 132.

When the result of the decision processing in step S 148 is NO, that is, when the CPU 30 executes the processing in step S 150 once after the ON-time duration of the direction switch which has been turned ON is changed from a value smaller than the default value to a value equal to or greater than the default value and if the direction switch remains ON thereafter, the CPU 30 returns to the processing in step S 132 without carrying out processing in step S150 and step S152.

When the decision result in step S138 above is NO, that is, when the center switch 88 is turned ON, the CPU 30 moves the AF area to the center of the screen. That is, the CPU 30 moves the AF area to the coarse adjustment position set in the center of the screen (step S 154). The CPU 30 then returns to the processing in step S132.

Through the above described processing, fine-tuning processing is performed when each direction switch 80 to 86 is turned ON for a short time and coarse adjustment processing is performed when each direction switch is turned ON for a long time. Furthermore, the center switch 88 allows the AF area to be easily moved to the standard center position of the screen.

When any one of the up and down direction switches 80, 82 of the four-direction switch direction switches 80 to 86 and any one of the right and left direction switches 84, 86 are allowed to be turned ON simultaneously in the first mode processing in Fig. 10 or the second mode processing in Fig. 11, that is, when operation indicating a diagonal direction is allowed, processes in steps S 110 to S 114 in Fig. 10 or processes in steps S 140 to S152 in Fig. 11 are carried out on each direction switch are performed in parallel. Furthermore, when such a plurality of direction switches are allowed to be turned ON simultaneously, if a situation occurs in which those ON times differ from one another, it is possible to regard as invalid the operation of a direction switch whose ON time is smaller than a default value and not to perform fine-tuning processing when coarse adjustment processing is performed in any one direction. Or when coarse adjustment processing is performed in any one direction, it is possible to perform coarse adjustment processing in the other direction.

Furthermore, in the second mode processing in Fig. 11, the AF area is moved to the nearest coarse adjustment position only once through coarse adjustment processing when any one direction switch is turned ON and the ON time is equal to or greater than the default value, but the present invention is not limited to this and it is possible to move the AF area to the nearest coarse adjustment position with respect to the current position (except the coarse adjustment position set as the current position) every time a predetermined time elapses with the direction switch turned ON after the ON-time duration equals or exceeds the default value.

Furthermore, in the first mode processing in Fig. 10 or the second mode processing in Fig. 11, the AF area is moved to the coarse adjustment position in the center of the screen when the center switch 88 is turned ON, but it is also possible to move the AF area to the center of the screen when the center switch 88 is turned ON even when the preset coarse adjustment position is not in the center of the screen.

The above described embodiments have illustrated the joystick, track ball or four-direction switch as the direction indication operation device which indicates the moving direction of the AF area, but any device other than these direction indication operation devices can also be used in the same way as the above described embodiments. For example, it is also possible to use a direction indication operation device provided with a piezoelectric element attached to a protruding bar-like member such as a track point so as to allow the piezoelectric element to detect the direction and magnitude of an operation force applied to the bar-like member. In this case, assuming that the direction of the operation force corresponds to the tilting direction of the joystick 32 and the magnitude of the operation force corresponds to the angle of tilt (the amount of operation) of the joystick 32, it is possible to perform processing related to a change of the position of the AF area in the same way as the processing shown in Fig. 7.

Furthermore, even when the position of the AF area is operated using anything other than the four-direction switch such as the joystick 32 and track ball, it is possible to provide a switch which moves the AF area to the center of the screen as in the case of the center switch 88 shown in Fig. 9. Furthermore, it is also possible to move the AF area to the center of the screen through some operation instead of the mode of the center switch 88 shown in Fig. 9.

Furthermore, in the above described embodiments, the coarse adjustment position shown in Fig. 5 or the like is only an example and the number of coarse adjustment positions and positions thereof may be different from those in Fig. 5 or the like. Furthermore, the above described embodiments have shown the case where one of a plurality of coarse adjustment positions is set in the center of the screen, but one of the coarse adjustment positions need not always be set in the center of the screen. Furthermore, the present invention can also be adapted so as to allow the user to set coarse adjustment positions at desired positions.

Furthermore, the present invention is also applicable to AF based on any system other than the contrast system.

## Claims

1. An autofocus system comprising:
a coarse adjustment position setting device which presets a plurality of discrete coarse adjustment positions (60) as positions at which an AF area (52) to be an autofocus target range can be set on a screen within an image-pickup range (50) of a camera;
a direction indication operation device which performs operation of indicating a moving direction of the AF area (52);
a detection device which detects a moving direction indicated by the operation of the direction indication operation device and an amount of operation or magnitude of the operation force of the operation whereby the moving direction is indicated;
an AF area moving device which moves the AF area to a nearest coarse adjustment position set in the moving direction detected by the detection device with respect to a current position of the AF area, the coarse adjustment position being any one of coarse adjustment positions (60) set by the coarse adjustment position setting device when the amount of operation or magnitude of the operation force detected by the detection device indicates a value equal to or greater than a default value; and
an autofocus device which automatically achieves focus on an object within the range of the AF area by controlling focus of an image-taking lens using the range of the AF area (52) out of the image-pickup range of the camera as a target range of autofocus.

2. The autofocus system according to claim 1, wherein the AF area moving device moves the AF area only once when the amount of operation or magnitude of the operation force detected by the detection device is changed from a value smaller than the default value to a value equal to or greater than the default value.

3. The autofocus system according to claim 1, wherein the AF area moving device moves the AF area every time the amount of operation or magnitude of the operation force detected by the detection device continues to indicate a value equal to or greater than the default value for a predetermined time.

4. The autofocus system according to claim 1, 2 or 3, wherein when the amount of operation or the magnitude of the operation force detected by the detection device indicates a value smaller than the default value, the AF area moving device continuously moves the AF area in the moving direction detected by the detection device with respect to the current position of the AF area (52).

5. The autofocus system according to claim 1, 2 or 3, wherein when the amount of operation or the magnitude of the operation force detected by the detection device indicates a value smaller than the default value, the AF area moving device continuously moves the AF area (52) in the moving direction detected by the detection device with respect to the current position of the AF area (52) and also moves the AF area (52) at a speed or an amount of displacement according to the amount of operation or the magnitude of the operation force detected by the detection device.

6. The autofocus system according to any one of claims 1 to 5, wherein the detection device detects the moving direction indicated by the operation of the direction indication operation device in upward, downward, leftward and rightward directions separately and detects the amount of operation or the magnitude of the operation force of the operation of indicating the moving direction divided into the amount of operation or the magnitude of the operation force corresponding to the operation of indicating the upward, downward, leftward and rightward directions, and
the AF area moving device moves the AF area based on the amount of operation or the magnitude of the operation force corresponding to the operation of indicating each direction detected by the detection device for each direction detected by the detection device.

7. The autofocus system according to any one of claims 1 to 6, wherein the direction indication operation device is a joystick (32), track ball or track point.

8. An autofocus system comprising:
a coarse adjustment position setting device which presets a plurality of discrete coarse adjustment positions (60) as positions at which an AF area (52) to be an autofocus target range can be set on a screen within an image-pickup range (50) of a camera;
a direction indication operation device which performs operation of indicating a moving direction of the AF area (52);
a detection device which detects a moving direction indicated by the operation of the direction indication operation device and an operation duration of the operation whereby the moving direction is indicated;
an AF area moving device which moves the AF area to a nearest coarse adjustment position set in the moving direction detected by the detection device with respect to a current position of the AF area, the coarse adjustment position being any one of coarse adjustment positions (60) set by the coarse adjustment position setting device when the operation duration detected by the detection device indicates a value smaller than a default value; and
an autofocus device which automatically achieves focus on an object within the range of the AF area by controlling focus of an image-taking lens using the range of the AF area (52) out of the image-pickup range of the camera as a target range of autofocus.

9. The autofocus system according to claim 8, wherein when the operation duration detected by the detection device shows a value equal to or greater than the default value, the AF area moving device continuously moves the AF area (52) in the moving direction detected by the detection device with respect to the current position of the AF area (52).

10. An autofocus system comprising:
a coarse adjustment position setting device which presets a plurality of discrete coarse adjustment positions (60) as positions at which an AF area (52) to be an autofocus target range can be set on a screen within an image-pickup range (50) of a camera;
a direction indication operation device which performs operation of indicating a moving direction of the AF area (52);
a detection device which detects a moving direction indicated by the operation of the direction indication operation device and an operation duration of the operation whereby the moving direction is indicated;
an AF area moving device which moves the AF area to a nearest coarse adjustment position set in the moving direction detected by the detection device with respect to a current position of the AF area, the coarse adjustment position being any one of coarse adjustment positions (60) set by the coarse adjustment position setting device when the operation duration detected by the detection device indicates a value equal to or greater than a default value; and
an autofocus device which automatically achieves focus on an object within the range of the AF area by controlling focus of an image-taking lens using the range of the AF area (52) out of the image-pickup range of the camera as a target range of autofocus.

11. The autofocus system according to claim 10, wherein when the operation duration detected by the detection device becomes a value equal to or greater than the default value, the AF area moving device moves the AF area only once.

12. The autofocus system according to claim 10, wherein the AF area moving device moves the AF area (52) every time the value corresponding to a predetermined time increases after the operation duration detected by the detection device becomes a value equal to or greater than the default value.

13. The autofocus system according to claim 10, 11 or 12, wherein when the operation duration detected by the detection device shows a value smaller than the default value, the AF area moving device continuously moves the AF area (52) in the moving direction detected by the detection device with respect to the current position of the AF area (52).

14. The autofocus system according to any one of claims 8 to 13, wherein the detection device detects the moving direction indicated by the operation of the direction indication operation device in upward, downward, leftward and rightward directions separately and also detects the operation duration corresponding to the operation of indicating the moving direction divided into operation durations corresponding to the operations of indicating the upward, downward, leftward and rightward directions, and
the AF area moving device moves the AF area (52) based on the operation duration corresponding to the operation of indicating each direction detected by the detection device for each direction detected by the detection device.

15. The autofocus system according to any one of claims 8 to 14, wherein the direction indication operation device is a four-direction switch.

16. The autofocus system according to any one of claims 8 to 15, further comprising a switch which moves the AF area (52) to a center of the screen, wherein when the switch is turned ON, the AF area moving device moves the AF area (52) to the center of the screen.
